# FASCICULE DE BREVET EUROPEEN

(11) **EP 3 756 272 B1**
(45) Date de publication et mention de la délivrance du brevet: **08.04.2026**
(21) Numéro de dépôt: 19708352.0
(22) Date de dépôt: 11.02.2019
(51) Int. Cl.: H02K 7/116

(54) **ACTIONNEUR ELECTRIQUE POUR UN SYSTEME DE CHAUFFAGE, VENTILATION ET/OU CLIMATISATION POUR VEHICULE AUTOMOBILE**
ELEKTRISCHER STELLANTRIEB FÜR KRAFTFAHRZEUGHEIZUNG, -BELÜFTUNGS- UND/ODER -KLIMATISIERUNGSSYSTEM
ELECTRIC ACTUATOR FOR A MOTOR VEHICLE HEATING, VENTILATION AND/OR AIR CONDITIONING SYSTEM

(30) Priorité: 19.02.2018 FR 1851379
(43) Date de publication de la demande: 30.12.2020
(73) Titulaire: Valeo Electrification, 95892 Cergy Pontoise (FR)
(72) Inventeur: SECK, Rawane, 78320 Le Mesnil Saint-Denis (FR); TELLIER, Laurent, 78320 Le Mesnil Saint-Denis (FR); BARAT, Didier, 78320 Le Mesnil Saint-Denis (FR); COLINET, Sébastien, 78320 Le Mesnil Saint-Denis (FR); GOMIS, Dione, 78320 Le Mesnil Saint-Denis (FR)
(74) Mandataire: Valeo Powertrain Systems
(86) Numéro de dépôt international: PCT/FR2019/050288
(87) Numéro de publication internationale: WO 2019/158841

(56) Documents cités:
- EP-A1- 2 999 093
- EP-A2- 1 296 440
- WO-A1-2010/115702
- DE-A1- 102012 212 143
- DE-B4- 102012 212 143
- DE-U1- 202006 014 817
- US-A1- 2003 222 532
- US-A1- 2017 254 389

## Description

La présente invention concerne un actionneur électrique adapté pour entraîner un élément mobile pour un système de chauffage, ventilation et/ou climatisation pour véhicule automobile.

Elle trouve une application particulière, mais non limitative dans les systèmes de chauffage, ventilation et/ou climatisation pour véhicule automobile.

Un actionneur électrique adapté pour entraîner un élément mobile pour un système de chauffage, ventilation et/ou climatisation pour véhicule automobile, connu de l'homme du métier, comprend :
- un moteur électrique comprenant un stator et un rotor ;
- une couronne satellite comprenant au moins un satellite ;
- une roue de sortie adaptée pour être entraînée en rotation par ladite couronne satellite ;
- un arbre d'entraînement en liaison avec le moteur électrique et adapté pour entraîner en rotation ladite couronne satellite.
   D1 US2003222532 décrit un système de motorisation 3 en 1 comprend un corps de moteur, un mécanisme de commande d'entraînement et un mécanisme de transmission de puissance. Un boîtier de circuit de commande d'entraînement est installé à une extrémité du corps du moteur, et un carter d'engrenage dans lequel est disposé un module d'engrenage de décélération est installé à l'autre extrémité du corps du moteur. Une carte de circuit imprimé est installée à l'une des extrémités du stator du moteur. Les signaux du stator sont transmis par des aiguilles conductrices de signaux à un circuit de commande d'entraînement dans le boîtier de circuit. Un siège de roulement inférieur du rotor est disposé à l'autre extrémité du stator du moteur. Un engrenage solaire est disposé à l'extrémité arrière de l'axe du rotor et engage les engrenages planétaires du module d'engrenage de décélération. Un siège d'engrenage de décélération est installé séparément à l'extrémité extérieure du siège de roulement inférieur du rotor. Le module d'engrenage de décélération est reçu dans le siège d'engrenage de décélération.
   D2 DE 202006 014817 décrit un entraînement comportant des étages d'engrenage intégrés dans un carter de moteur entraînés par des excentriques par un stator et un rotor. Les excentriques définissent des axes excentriques qui sont parallèles à un axe de rotation du rotor. Un pignon servant d'entraînement est combiné à deux biseaux et peut tourner au niveau de l'axe par rapport au boîtier. Les axes sont disposés ensemble de manière déplaçable dans une direction périphérique de l'axe.

Un inconvénient de ces états de la technique antérieur est qu'il est nécessaire d'aligner correctement l'arbre d'entraînement perpendiculairement au plan du moteur électrique, de la couronne satellite et de la roue de sortie pour permettre un bon fonctionnement de l'actionneur électrique, notamment pour assurer une bonne liaison entre l'arbre d'entraînement et la couronne satellite et ainsi avoir un bon rendement de l'actionneur électrique. L'alignement peut être difficile à obtenir ou peut s'altérer dans le temps du fait des roulements de l'arbre d'entraînement. L'arbre d'entraînement peut alors avoir un mouvement de précession qui peut affaiblir les liaisons avec la couronne satellite et ainsi diminuer le couple de sortie au niveau de la roue de sortie.

Dans ce contexte, la présente invention vise à proposer une solution alternative à l'état de la technique précédemment mentionné.

A cette fin, l'invention propose un actionneur électrique selon la revendication 1.
Ainsi, comme on va le voir en détail ci-après, le fait de remplacer l'arbre d'entraînement par une roue motrice en liaison directe avec ledit rotor, va permettre d'une part de supprimer le problème d'alignement et d'autre part de gagner en compacité de l'actionneur électrique. En outre, il n'y a plus de problème d'usure prématurée de la couronne satellite dû au mouvement de précession.

Ledit moteur électrique est traversé tout ou partie par ladite étoile de sortie de ladite roue de sortie. Cela permet de monter l'actionneur électrique sur le système de chauffage, ventilation et/ou climatisation dans n'importe quel sens.

Selon des modes de réalisation non limitatifs, l'actionneur électrique peut comporter en outre une ou plusieurs caractéristiques supplémentaires parmi les suivantes :
Selon un mode de réalisation non limitatif, ladite roue motrice est surmoulée avec ledit rotor dudit moteur électrique. Cela permet de réduire le nombre de pièces de l'actionneur électrique à assembler.

Selon l'invention, ledit rotor dudit moteur électrique et ladite roue motrice sont creux. Cela permet de passer l'étoile de sortie au travers dudit moteur électrique.

Selon un mode de réalisation non limitatif, ledit moteur électrique, ladite roue motrice, ladite couronne satellite et ladite roue de sortie s'étendent selon un même axe moteur dudit moteur électrique. Cela permet de réduire l'encombrement dudit actionneur électrique. Ladite roue motrice, ladite couronne satellite, et ladite roue de sortie tournent ainsi autour de l'axe moteur dudit moteur électrique.

Selon un mode de réalisation non limitatif, ledit actionneur électrique comprend en outre un boîtier, et ledit moteur électrique, ladite roue motrice, ladite couronne satellite et ladite roue de sortie sont logés dans ledit boîtier. Cela permet de supprimer un carter pour moteur électrique habituellement utilisé pour loger uniquement le moteur électrique.

Selon un mode de réalisation non limitatif, ledit au moins un satellite comprend deux étages d'engrenages avec des diamètres différents. Cela permet d'augmenter le couple et de réduire la vitesse de rotation.

Selon un mode de réalisation non limitatif, ladite couronne satellite comprend un nombre impair de satellites. Cela permet d'équilibrer la couronne satellite et d'améliorer le rendement de l'actionneur électrique.

Selon un mode de réalisation non limitatif, ladite roue motrice, ladite couronne satellite et ladite roue de sortie forment un train d'engrenages épicycloïdal. Cela permet de d'avoir un couple suffisant pour l'actionneur électrique dans un espace très réduit.

Selon un mode de réalisation non limitatif, ledit actionneur électrique comprend en outre une carte électronique positionnée sur ou sous ledit moteur électrique. Cela permet de réduire l'encombrement latéral dudit actionneur électrique et l'assemblage de la carte électronique est rapide et simple.

Selon un mode de réalisation non limitatif, ladite carte électronique est adaptée pour s'étendre selon un plan perpendiculaire à l'axe moteur dudit moteur électrique. Cela permet de gagner en compacité pour l'actionneur électrique.

Selon un mode de réalisation non limitatif, la carte électronique est positionnée sur le stator.

Selon un mode de réalisation non limitatif, ladite carte électronique est adaptée pour encercler tout ou en partie ledit rotor et ladite roue motrice. Ainsi, l'ouverture dans le rotor n'est pas gênée par la carte électronique. L'étoile de sortie de la roue de sortie peut facilement passer au travers de ladite ouverture.

Selon un mode de réalisation non limitatif, la roue motrice est en liaison directe avec au moins un satellite de ladite couronne satellite.
La roue motrice comprend des dents qui coopèrent avec des dents dudit au moins satellite de ladite couronne satellite. Cela permet un entraînement direct de ladite couronne satellite par ladite roue motrice. En particulier, les dents de la roue motrice sont adaptées pour coopérer avec un premier étage d'engrenages dudit au moins un satellite.

Selon un mode de réalisation non limitatif, ledit au moins un satellite de la couronne satellite est en liaison directe avec ladite roue de sortie.
En particulier il comprend des dents qui coopèrent avec des dents de ladite roue de sortie. Cela permet un entraînement direct de la roue de sortie par ledit au moins un satellite. En particulier, les dents de la roue de sortie sont adaptées pour coopérer avec un deuxième étage d'engrenages dudit au moins un satellite.

Selon un mode de réalisation non limitatif, l'étoile de sortie est en liaison directe avec l'élément mobile dudit système de chauffage, ventilation et/ou climatisation.
En particulier, elle comprend des dents qui coopèrent avec des dents de l'élément mobile dudit système de chauffage, ventilation et/ou climatisation. Cela permet un entraînement direct dudit élément mobile par ladite roue de sortie, sans pièce cinématique additionnelle.

Selon un mode de réalisation non limitatif, l'étoile de sortie présente une complémentarité de forme avec une partie de l'élément mobile.

Il est également proposé un système de chauffage, ventilation et/ou climatisation comprenant un actionneur électrique selon l'une quelconque des caractéristiques précédentes.

L'invention et ses différentes applications seront mieux comprises à la lecture de la description qui suit et à l'examen des figures qui l'accompagnent :
- la figure 1 représente un schéma cinématique de principe d'un actionneur électrique pour système de chauffage, ventilation et/ou climatisation pour véhicule automobile, ledit actionneur électrique comprenant un boîtier, un moteur électrique, une roue motrice, une carte électronique, une couronne satellite, et une roue de sortie, selon un mode de réalisation non limitatif ;
- la figure 2 représente une vue éclatée de l'actionneur électrique de la figure 1, selon un mode de réalisation non limitatif ;
- la figure 3 représente une vue de profil de l'actionneur électrique des figures 1 et 2 sans le boîtier, selon un mode de réalisation non limitatif ;
- la figure 4 est une vue en coupe l'actionneur électrique de la figure 3, selon un mode de réalisation non limitatif ;
- la figure 5 représente une vue en perspective du stator et du rotor du moteur électrique de l'actionneur électrique des figures 1 à 4, selon un mode de réalisation non limitatif ;
- la figure 6a représente une vue en perspective du rotor du moteur électrique assemblé à la roue motrice de l'actionneur électrique des figures 1 à 4, selon un mode de réalisation non limitatif ;
- la figure 6b représente une vue en perspective de l'ensemble rotor-roue motrice de la figure 6a assemblé avec le stator du moteur électrique de la figure 5, selon un mode de réalisation non limitatif ;
- la figure 7a, représente une vue en perspective de la carte électronique de l'actionneur électrique des figures 1 à 4, assemblée avec l'ensemble rotor-roue motrice de la figure 6a, selon un mode de réalisation non limitatif ;
- la figure 7b, représente une vue en perspective de l'ensemble rotor-roue motrice-carte électronique de la figure 7a assemblé avec le stator du moteur électrique de la figure 5, selon un mode de réalisation non limitatif ;
- la figure 8a, représente une vue en perspective de la couronne satellite de l'actionneur électrique des figures 1 à 4, assemblée avec l'ensemble rotor-roue motrice-carte électronique, selon un mode de réalisation non limitatif ;
- la figure 8b, représente une vue en perspective de l'ensemble rotor-roue motrice-carte électronique-couronne satellite de la figure 8a assemblé avec le stator du moteur électrique de la figure 5, selon un mode de réalisation non limitatif ;
- la figure 9a, représente une vue en perspective de la roue de sortie de l'actionneur électrique des figues 1 à 4, assemblée avec l'ensemble rotor-roue motrice-carte électronique-couronne satellite, selon un mode de réalisation non limitatif ;
- la figure 9b, représente une vue en perspective l'ensemble rotor-roue motrice-carte électronique-couronne satellite-roue de sortie de la figure 9a assemblé avec le stator du moteur électrique de la figure 5, selon un mode de réalisation non limitatif ;
- la figure 10a, représente une vue en perspective du boîtier de l'actionneur électrique des figues 1 et 2, selon un mode de réalisation non limitatif ; et
- la figure 10b, représente une vue en perspective du boîtier de la figure 10a dans lequel sont logés le moteur électrique, la roue motrice, la couronne satellite et la roue de sortie de l'actionneur électrique des figures 1 à 4, selon un mode de réalisation non limitatif.

Les éléments identiques, par structure ou par fonction, apparaissant sur différentes figures conservent, sauf précision contraire, les mêmes références.

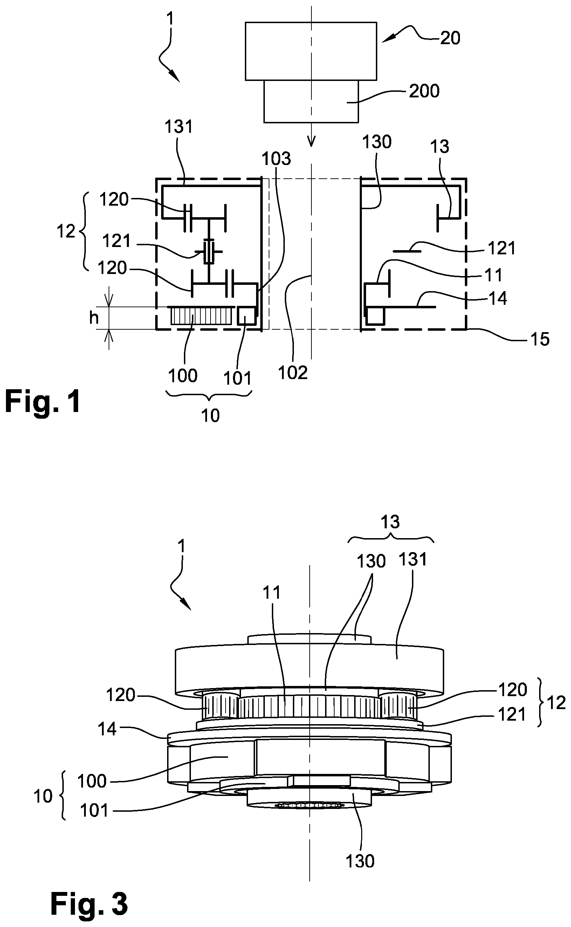

L'actionneur électrique 1 est décrit en référence aux figures 1 à 10b selon des modes de réalisation non limitatifs.
L'actionneur électrique 1 est adapté pour entraîner un élément mobile 20 (illustré schématiquement sur la figure 1) d'un système de chauffage, ventilation et/ou climatisation (non illustré), couramment appelé système HVAC « Heating Ventilation and Air Conditioning » en anglais, pour véhicule automobile.
Dans la suite de la description le système de chauffage, ventilation et/ou climatisation est également appelé système HVAC.
Par véhicule automobile, on entend tout type de véhicule motorisé.
L'actionneur électrique 1 est adapté pour être monté dans le système HVAC. Dans un mode de réalisation non limitatif, l'actionneur électrique 1 est adapté pour être monté d'un côté d'une paroi du système HVAC tandis que l'élément mobile 20 est monté de l'autre côté.
Dans un mode de réalisation non limitatif, le système HVAC est positionné sous le tableau de bord du véhicule automobile.
Un système HVAC assure la gestion thermique d'un habitacle du véhicule automobile. Il permet la mise en mouvement d'un flux d'air envoyé dans l'habitacle, ainsi que son conditionnement thermique, notamment en vue de chauffer et/ou refroidir ledit habitacle.
A cet effet, le système HVAC comprend un échangeur de chaleur permettant d'assurer une fonction de chauffage, notamment un radiateur, et un échangeur de chaleur permettant d'assurer une fonction de refroidissement, notamment un évaporateur. Le flux d'air circulant dans le système HVAC est canalisé vers l'un et/ou l'autre des échangeurs de chaleur pour réaliser le conditionnement thermique souhaité. Le système HVAC délivre le flux d'air traité thermiquement en des zones particulières de l'habitacle, comme une zone basse de l'habitacle, dite "pied", une zone du pare-brise et/ou une zone haute de l'habitacle, dite "ventilation", notamment située à proximité du visage du passager du véhicule.
La circulation du flux d'air au travers des échangeurs de chaleur et la distribution sélective du flux d'air traité vers les diverses zones de l'habitacle mentionnées ci-dessus s'opère par l'actionnement d'éléments mobiles 20, disposés au travers de conduits de distribution ménagés dans le système HVAC. Un élément mobile 20 est commandé électriquement chacun par un actionneur électrique 1 ou plusieurs éléments mobiles 20 sont commandés électriquement par un actionneur électrique 1. La consigne électrique qu'ils reçoivent de l'actionneur électrique 1 est transformée en un mouvement des éléments mobiles 20 pour les amener à une certaine position. L'actionneur électrique 1 permet ainsi de piloter automatiquement un ou plusieurs éléments mobiles 20.
Dans un mode de réalisation non limitatif, ces éléments mobiles 20 sont des volets aérauliques. Ce mode de réalisation non limitatif est pris dans la suite de la description.

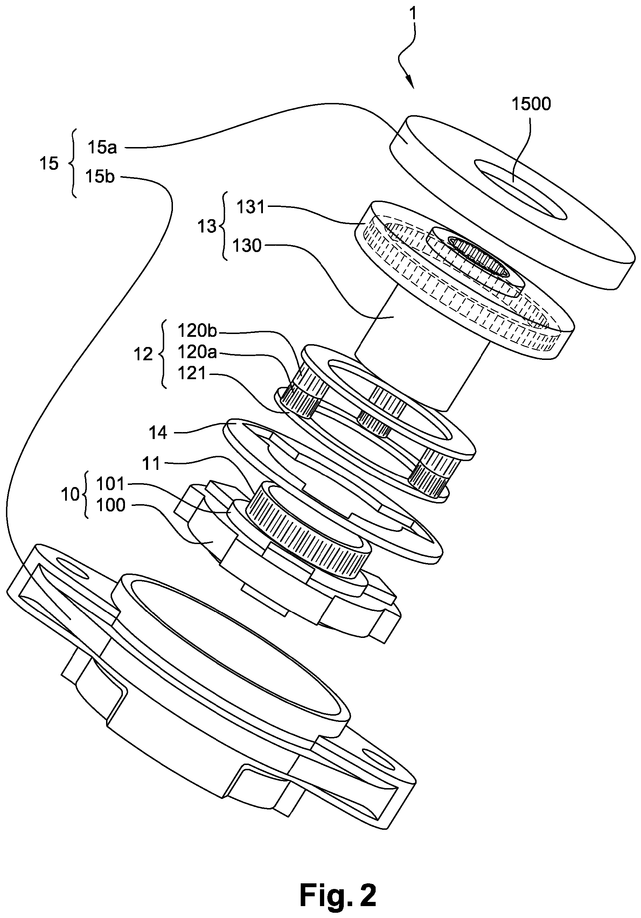

Tel qu'illustré sur les figures 1 et 2, l'actionneur électrique 1 comprend :
- un moteur électrique 10 comprenant un stator 100 et un rotor 101 ;
- une roue motrice 11 ;
- une couronne satellite 12 comprenant au moins un satellite 120 ;
- une roue de sortie 13.
La roue motrice 11, la couronne satellite 12 et la roue de sortie 13 forment train d'engrenages qui est un réducteur de vitesse.
Dans un mode de réalisation non limitatif, l'actionneur électrique 1 comprend en outre une carte électronique 14.
Dans un mode de réalisation non limitatif, l'actionneur électrique 1 comprend en outre un boîtier 15.
Dans un mode de réalisation non limitatif, l'actionneur électrique 1 présente une forme sensiblement circulaire.
Comme illustré sur les figures 1 à 3, le moteur électrique 10, la roue motrice 11, la couronne satellite 12, et la roue de sortie 13 sont coaxiaux. Ainsi, ils s'étendent selon un même axe qui est l'axe moteur 102 dudit moteur électrique 10. Cela permet un gain en compacité latérale.
Tel qu'illustré sur la figure 1, on notera que l'axe de l'élément mobile 20 est confondu également avec l'axe moteur 102.
Dans un mode de réalisation non limitatif, l'actionneur électrique 1 est adapté pour détecter que l'élément mobile 20, tel que le volet aéraulique, arrive en fin de course. En fin de course, il y a un arrêt physique. L'actionneur électrique 1 est capable de détecter la fin de course. Il comprend ainsi une fonction de détection de butée. Cela permet de couper la commande du moteur électrique 10 de sorte qu'il n'y ait pas de bruit dû à l'élément mobile 20 qui arrive en butée et de sorte qu'il n'y ait pas d'usure des dents des différentes roues 11, 12, 13 de l'actionneur électrique 1. L'actionneur électrique 1 est à ce moment appelé actionneur électrique intelligent. La fonction de détection de butée et sa réalisation étant connue de l'homme du métier, elle n'est pas décrite plus en détail ici.

Les différents éléments de l'actionneur électrique 1 sont décrits en détail ci-après.

### • Boîtier 15

Le boîtier 15 est illustré sur les figures 1, 2, 10a et 10b.

Il permet de monter l'actionneur électrique 1 dans le système HVAC.

Dans un mode de réalisation non limitatif, le boîtier 15 est réalisé dans un matériau plastique. Cela permet d'avoir un boîtier 15 plus léger, moins cher et moins bruyant que s'il est réalisé dans un matériau métallique.

Le boîtier 15 est adapté pour recevoir le moteur électrique 10, la roue motrice 11, la couronne satellite 12 et la roue de sortie 13. Ainsi, le moteur électrique 10, la roue motrice 11, la couronne satellite 12 et la roue de sortie 13 sont logés dans un boîtier 15 unique.

Dans un mode de réalisation non limitatif illustré, le boîtier 15 présente une forme sensiblement circulaire.

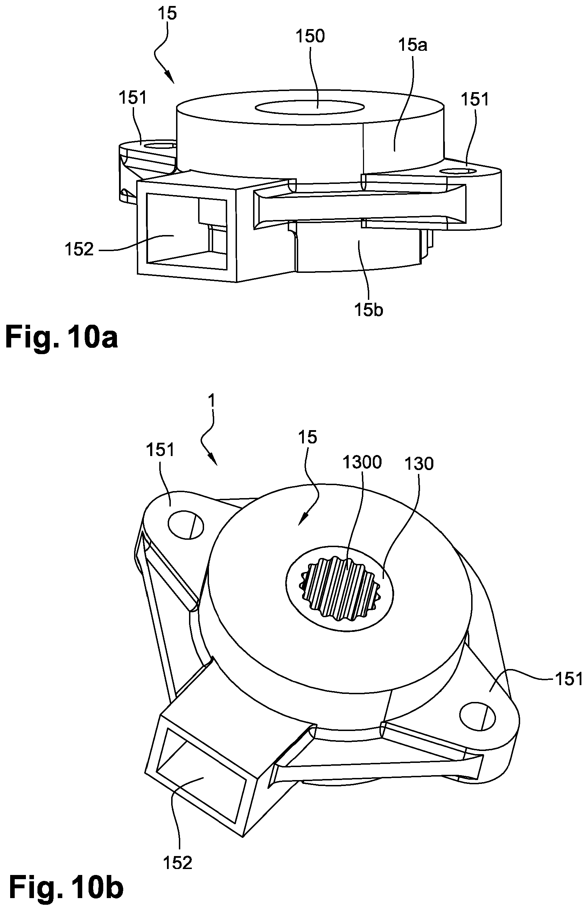

Tel qu'illustré sur la figure 10a, le boîtier 15 comprend un capot supérieur 15a et un capot inférieur 15b adaptés pour couvrir et protéger les autres éléments 10, 11, 12, 13, 14 de l'actionneur électrique 1.

Dans des exemples non limitatifs, le capot supérieur 15 a et le capot inférieur 15b sont assemblés ensemble par clips ou par collage.

Le capot supérieur 15a et le capot inférieur 15b s'étendent sensiblement dans un plan perpendiculaire à l'axe moteur 102.

Dans un mode de réalisation non limitatif, le boîtier 15 comprend en outre une ouverture 150 illustrée sur la figure 10a, ménagée dans le capot supérieur 15a, dans laquelle une extrémité d'une étoile de sortie 130 de la roue de sortie 13 (décrite plus loin) peut s'insérer tel qu'illustré sur la figure 10b. Cette ouverture 150 permet de maintenir la roue de sortie 13 en position.

Dans un mode de réalisation non limitatif, le boîtier 15 comprend en outre un dispositif de montage 151 sur le système HVAC. Dans un mode de réalisation non limitatif, le dispositif de montage 151 est en saillie radiale du capot supérieur 15a, ou du capot inférieur 15b ou de part et d'autre des deux capots.

Dans l'exemple non limitatif illustré, le dispositif de montage est composé de deux oreilles 151 traversées par des orifices adaptés pour recevoir chacun une vis. Les deux oreilles 151 sont en saillie radiale du capot supérieur 15a et du capot inférieur 15b tel qu'illustré sur la figure 10a.

On notera que le fait d'avoir le dispositif de montage 151 de part et d'autre du capot supérieur 15a et du capot inférieur 15b permet que les vis qui coopèrent avec le dispositif de montage 151 maintiennent le capot supérieur 15a et le capot inférieur 15b de sorte à éviter qu'ils ne se désolidarisent lorsqu'une force de pression est appliquée sur la capot supérieur 15a. Une telle force de pression est appliquée lorsque l'élément mobile 20 est monté sur la roue de sortie 13.

Dans un mode de réalisation non limitatif, le boîtier 15 comprend en outre une fiche électrique 152. La fiche électrique 152 débouche du boîtier 15 et s'étend de manière radiale. Elle forme une interface électrique entre la carte électronique 14 décrite plus loin et un connecteur électrique (non illustré) qui transmet des signaux de commande et des signaux de puissance pour respectivement commander et alimenter ladite carte électronique 14. Ces signaux de commande et signaux de puissance sont générés par une unité de contrôle électronique (non illustrée) du véhicule automobile.

### • Moteur électrique 10

Le moteur électrique 10 est illustré en tout ou partie sur les figures 1 à 9b. Dans des modes de réalisation non limitatifs, le moteur électrique 10 est un moteur bipolaire pas à pas ou un moteur triphasé, ou un moteur à courant continu avec ou sans balais.

Il est logé dans le boîtier 15.

Le moteur électrique 10 comprend un axe moteur 102 illustré sur les figures 1 et 3.

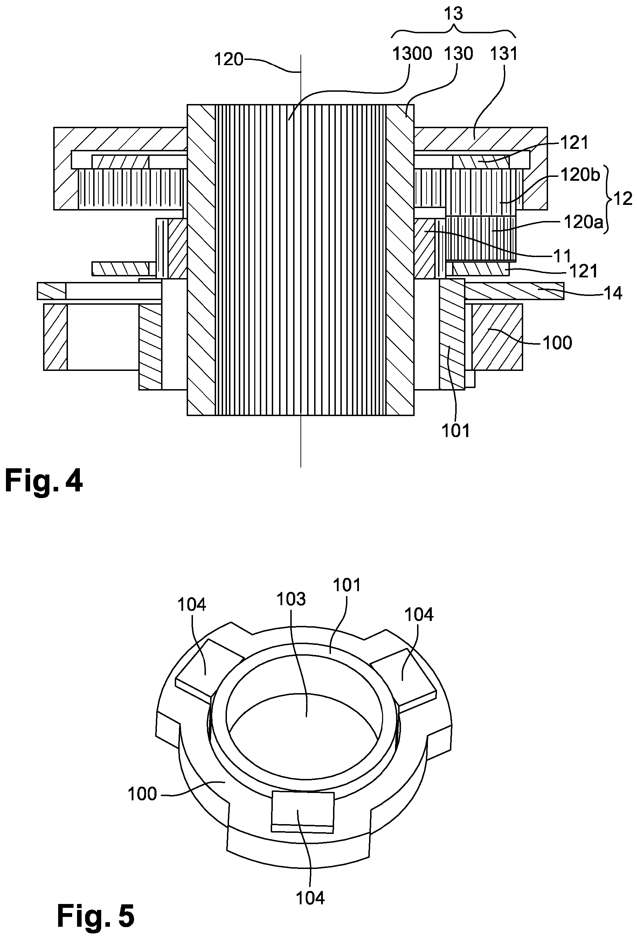

Tel qu'illustré sur la figure 5, dans un mode de réalisation non limitatif, le rotor 101 est un rotor interne, à savoir il se trouve à l'intérieur du stator 100. Ainsi, il est emboîté dans le stator 100.

Le stator 100 est de forme annulaire creuse et comprend une série de bobines 104 en cuivre entourant le rotor 101. Dans l'exemple illustré, il y a trois bobines 104. Dans d'autres exemples non limitatifs non illustrés, il y a six ou huit bobines 104.

Le moteur électrique 10 est adapté pour entraîner en rotation la roue motrice 11, assurant ainsi la mise en rotation de la couronne satellite 12 et de la roue de sortie 13, et par conséquent la mise en mouvement de l'élément mobile 20.

Plus particulièrement, le rotor 101 du moteur électrique 10 est adapté pour entraîner en rotation la roue motrice 11.

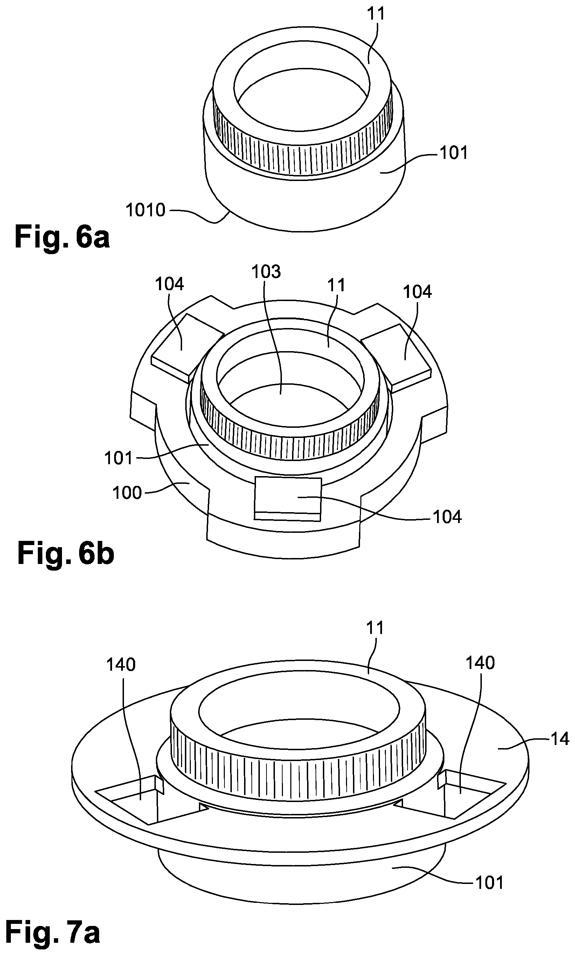

Dans un mode de réalisation non limitatif illustré sur la figure 6a par exemple, le rotor 101 et la roue motrice 11 sont solidaires l'un de l'autre. Le rotor 101 est ainsi en liaison directe avec la roue motrice 11. Cela permet au rotor 101 de faire partie du train d'engrenages formé par la roue motrice 11, la couronne satellite 12, et ladite roue de sortie 13.

Dans une variante de réalisation non limitative, le rotor 101 et la roue motrice 11 sont emboîtés. Dans une autre variante de réalisation non limitative, la roue motrice 11 est surmoulée avec le rotor 101. Cela permet un assemblage plus simple et rapide de l'actionneur électrique 1 car il y a moins de pièces à assembler.

Dans un mode de réalisation non limitatif illustré, le diamètre du rotor 101 est plus grand que celui de la roue motrice 11.

Dans un mode de réalisation non limitatif non illustré, la partie de la roue motrice 11 emboîtée dans le rotor 101 comprend un diamètre plus petit que celui du rotor 101 et l'autre partie en liaison avec la couronne satellite 12 comprend un diamètre plus grand que celui du rotor 101.

Dans un mode de réalisation non limitatif, illustré par exemple sur la figure 5, le rotor 101 est un cylindre creux. Un tel rotor 101 permet d'obtenir un moteur électrique 10 moins lourd qu'un moteur électrique 10 qui comprend un rotor plein. En effet, dans ce dernier cas, à couple égal, il faut augmenter le flux magnétique dans le stator et pour ce faire avoir un stator avec des bobines plus grandes ou un stator plus grand qui pèse donc plus lourd.

Selon l'invention, l'étoile de sortie 130 passe tout ou partie au travers du moteur électrique 10. Ainsi, ledit moteur électrique est traversé tout ou partie par ladite étoile de sortie de ladite roue de sortie.

En particulier, le rotor 101, qui est un cylindre creux, est traversé tout ou partie par l'étoile de sortie 130 de ladite roue de sortie 13. Ainsi, le rotor 101 comprend une ouverture 103 à travers de laquelle l'étoile de sortie 130 de ladite roue de sortie 13 (décrite plus loin) peut passer tout ou partie.

Ainsi, le rotor 101 comprend une base 1010 élargie de sorte à laisser passer l'étoile de sortie 130. Le fait d'élargir la base 1010 du rotor 101 permet de réduire la hauteur du moteur électrique 10. On obtient ainsi un moteur électrique 10 relativement plat et plus puissant.

De plus, cela permet d'obtenir un champ magnétique plus important et donc plus de couple que pour un rotor plus petit.

La roue motrice 11 étant solidaire du rotor 101, l'étoile de sortie 130 passe ainsi également tout ou partie au travers de la roue motrice 11. La roue motrice 11 comprend ainsi également ladite ouverture 103.

### • Roue motrice 11

La roue motrice 11 est illustrée sur les figures 1 à 4, et 6a à 9b.

La roue motrice est également appelée planétaire interne.

Comme décrit précédemment, dans un mode de réalisation non limitatif, la roue motrice 11 est solidaire du rotor 101. Dans une variante de réalisation non limitative, elle est surmoulée avec le rotor 101 du moteur électrique 10. Tel qu'illustré sur la figure 6b, l'ensemble rotor-roue motrice est emboîté dans le stator 100.

La roue motrice étant solidaire du rotor 101, aucun mouvement de précession ne peut être engendré. Par ailleurs, il n'y plus de roulements, pas d'arbre d'entraînement à maintenir dans un axe. Le montage est ainsi plus simple. On réduit ainsi le nombre de pièces.

La roue motrice 11 est adaptée pour :
- être entraînée en rotation par le rotor 101 du moteur électrique 10 comme décrit précédemment ; et
- être entraîné en rotation la couronne satellite 12.

La roue motrice 11 tourne autour de l'axe moteur 102.

La roue motrice 11 est emboîtée dans la couronne satellite 120 décrite plus loin, en particulier dans son support 121.

La roue motrice 11 coopère avec au moins un satellite 120 de la couronne satellite 12. Dans l'exemple illustré sur les figures, elle coopère avec trois satellites 120.

Dans un mode de réalisation non limitatif, lorsqu'un satellite 120 comprend deux étages d'engrenages 120a, 120b avec des diamètres différents, la route motrice 11 coopère avec un seul étage d'engrenage 120a d'un satellite 120. Ledit étage d'engrenage 120a, est celui le plus proche du moteur électrique 10.

La roue motrice 11 est en liaison directe avec le satellite 120, en particulier ici avec son étage d'engrenage 120a.

Dans un mode de réalisation non limitatif, la roue motrice 11 comprend une surface externe dentée dont les dents coopèrent avec des dents du satellite 120 (en particulier de l'étage d'engrenage 120a) de sorte à le mettre en rotation.

Pour jouer sur la valeur du couple de sortie et de la vitesse, on joue sur le nombre de dents de la roue motrice 11 et sur l'ensemble des engrenages. Grâce au train d'engrenages épicycloïdal (décrit plus loin), on augmente le couple de sortie pour bouger l'élément mobile 20. Il n'est ainsi pas nécessaire d'avoir un moteur électrique 10 très puissant. On économise ainsi de l'énergie pour le faire tourner. Dans un exemple non limitatif, le moteur électrique 10 comporte une puissance d'au moins 0,2 N/cm. Ainsi, plus le moteur électrique 10 présente une puissance faible, plus le couple de sortie doit être important, ceci en jouant sur le rapport d'engrenage, par exemple le train d'engrenages épicycloïdal.

### • Couronne satellite 12

La couronne satellite 12 est illustrée sur les figures 1 à 4, et 8a à 9b.

La couronne satellite 12 comprend :
- au moins un satellite 120 ;
- un support 121, autrement appelé porte satellite.

Un satellite 120 est également appelé planétaire.

La couronne satellite 12 est adaptée pour :
- être entraînée en rotation par la roue motrice 11 comme décrit précédemment ;
- entraîner en rotation la roue de sortie 13.

Un satellite 120 est adapté pour tourner sur lui-même. Il effectue une rotation autour de son axe. Par ailleurs, il est adapté pour tourner autour de l'axe moteur 102.

Dans un mode de réalisation non limitatif, un satellite 120 est formé par au moins une roue dentée, appelée également engrenage, dont les dents coopèrent avec les dents formées sur la roue de sortie 13 décrite plus loin, de sorte à la mettre en rotation.

Dans un mode de réalisation non limitatif, la couronne satellite 12 est à double étage. Ainsi, un satellite 120 comprend deux étages d'engrenages 120a, 120b.

Dans un mode de réalisation non limitatif, un satellite 120 comprend deux étages d'engrenages 120a, 120b avec des diamètres différents et un nombre de dents différents. Dans un mode de réalisation non limitatif, un satellite 120 est une pièce monobloc.

L'étage d'engrenages 120b, autrement appelé étage d'engrenages supérieur 120b, est de diamètre supérieur à l'étage d'engrenages 120a, autrement appelé étage d'engrenages inférieurs 120a.

Cela permet d'augmenter le couple et de réduire la vitesse.

En particulier, l'étage d'engrenages 120a inférieur est adapté pour coopérer avec la roue motrice 11 comme décrit précédemment. Il est en liaison directe avec ladite roue motrice 11.

L'étage d'engrenages 120b supérieur est adapté pour coopérer avec la roue de sortie 13 de sorte à l'entraîner en rotation. Il est en liaison directe avec ladite roue de sortie 13. En particulier, il est en contact avec des dents d'un planétaire externe 131 de la roue de sortie 13 (décrite plus loin).

Dans un mode de réalisation non limitatif, la couronne satellite 12 comprend une pluralité de satellites 120. Cela permet d'améliorer le rendement du train d'engrenages formé par la roue motrice 11, la couronne satellite 12, et ladite roue de sortie 13, car il y a moins de glissements entre les dents qui coopèrent entre elles ; autrement dit, il y a moins de sauts de dents.

Dans un mode de réalisation non limitatif, elle comprend un nombre impair de satellites 120. Dans l'exemple non limitatif illustré, elle comprend trois satellites 120. Cela permet d'équilibrer la couronne satellite 12. Le nombre de trois satellites 120 est un bon compromis entre le rendement et l'encombrement.

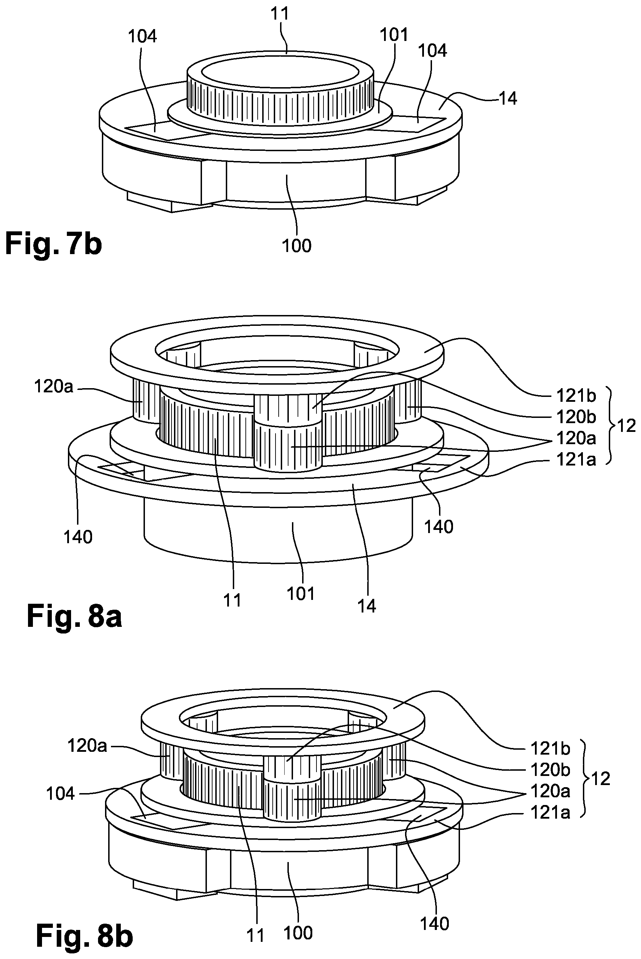

Tel qu'illustré sur la figure 8a, le support 121 est composé de deux anneaux supports 121a, 121b adaptés pour maintenir les axes mécaniques (non illustrés) sur lesquels tournent les satellites 120. Les satellites 120 sont ainsi disposés entre les deux anneaux supports 121a et 121b.

La couronne satellite 12 tourne autour de l'axe moteur 102. En particulier, c'est son support 121 qui tourne autour dudit axe moteur 102 de sorte à faire tourner les satellites 120 autour dudit axe moteur 102.

### • Roue de sortie 13

La roue de sortie 13 est illustrée sur les figures 1 à 4, 9a, 9b, et 10b.

La roue de sortie 13 est adaptée pour :
- être entraînée en rotation par la couronne satellite 12 comme vu précédemment ;
- entraîner l'élément mobile 20 du système HVAC.

En particulier, la roue de sortie 13 comprend :
- un planétaire externe 131 ; et
- une étoile de sortie 130.

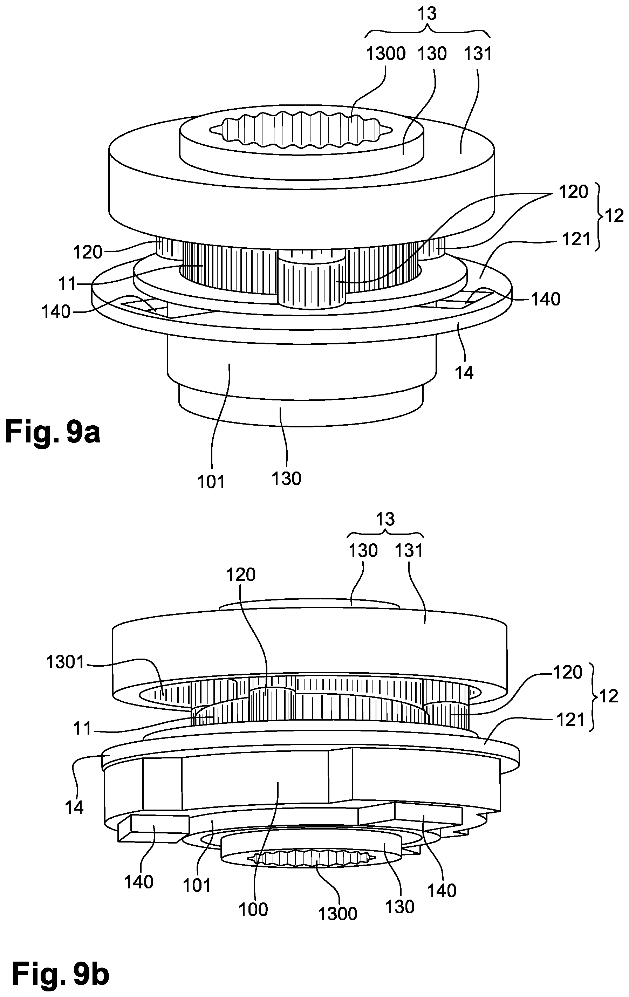

Le planétaire externe 131 est adapté pour être entraîné en rotation par la couronne satellite 12. En particulier, le planétaire externe 131 est adapté pour coopérer avec l'étage d'engrenage 120b supérieur des satellites 120 de la couronne satellite 12 comme décrit précédemment. Le planétaire externe 131 comprend une surface interne dentée 1301 (illustrée sur la figure 9b) dont les dents coopèrent avec les dents des satellites 120 de la couronne satellite 12.

L'étoile de sortie 130 est adaptée pour entraîner l'élément mobile 20 de sorte que ce dernier se mette en mouvement. L'élément mobile 20 a ainsi la même vitesse de rotation que l'étoile de sortie 130.

En particulier, l'étoile de sortie 130 est adaptée pour coopérer avec une partie en saillie 200 (schématisée sur la figure 1) de l'élément mobile 20. L'étoile de sortie 130 présente ainsi une complémentarité de forme avec la partie en saillie 200 de l'élément mobile 20.

Selon l'invention, l'étoile de sortie 130 est creuse et présente des cannelures sur sa surface interne tel qu'illustré sur la figure 4 par exemple. La roue de sortie 13 est ainsi dans ce mode de réalisation non limitatif une roue de sortie dite femelle.

L'étoile de sortie 130 présente une hauteur suffisante pour enfoncer la partie en saillie 200 de l'élément mobile 20.

Tel qu'illustré sur la figure 9a, l'étoile de sortie 130 est partiellement en saillie axiale du planétaire externe 131 de sorte à être insérée dans le capot supérieur 15a du boîtier 15 tel qu'illustré sur la figure 10b. Alors que les autres éléments 10, 11, 12, 14 de l'actionneur électrique 1 sont enfermés dans le boîtier 15 sans être accessibles, l'étoile de sortie 130 est ainsi accessible pour y insérer la partie en saillie 200 de l'élément mobile 20.

Tel qu'illustré sur la figure 4, l'étoile de sortie 130 s'étend le long de l'axe moteur 102 en direction du stator 101.

Selon l'invention, l'étoile de sortie 13 traverse tout ou partie de l'actionneur électrique 1.

Cela permet de pouvoir insérer la partie en saillie 200 de l'élément mobile 20 d'un côté ou de l'autre de l'actionneur 1. Cela permet ainsi une plus grande souplesse d'installation de l'actionneur 1 dans le système HVAC. Enfin, cela permet d'avoir un actionneur électrique plus compact axialement par rapport à une étoile de sortie non traversant et s'étendant majoritairement en saillie du boîtier 15.

Dans un mode de réalisation non limitatif, l'étoile de sortie 13 traverse tout ou partie le moteur électrique 10. En particulier, elle passe ainsi tout ou partie au travers de l'ouverture 103 du rotor 100 décrite précédemment. Dans une variante de réalisation non limitative illustrée sur les figures 1 et 4, l'étoile de sortie 130 traverse complètement le moteur électrique 10 jusqu'à déboucher du côté stator 100 de l'actionneur 1. Elle traverse ainsi l'actionneur électrique 1 de part en part. Cela permet d'avoir une plus grande surface de liaison entre les cannelures de l'étoile de sortie 130 et de la partie en saillie 200 de l'élément mobile 20 et ainsi de rendre plus robuste et plus fiable le montage de l'élément mobile 20 sur l'actionneur électrique 1. L'étoile de sortie 130 et le planétaire externe 131 sont solidaires. Par conséquent, la rotation du planétaire externe 131 entraîne la rotation de l'étoile de sortie 131. Dans des modes de réalisation non limitatifs, l'étoile de sortie 130 est surmoulée avec le planétaire externe 131 ou emboîtée dans ledit planétaire externe 131.

La roue motrice 11, la couronne satellite 12, et ladite roue de sortie 13 qui ont été décrites sont ainsi empilées et emboîtées. Elles forment un train d'engrenages épicycloïdal, autrement appelé réducteur de vitesse épicycloïdal.
On notera que lorsqu'un satellite 120 de la couronne satellite 12 comprend deux étages d'engrenages 120a, 120b, on parle de train d'engrenages épicycloïdal à double étages.
Un train d'engrenages épicycloïdal permet d'avoir un couple suffisant dans un espace très réduit. Cela permet également d'avoir un couple de maintien suffisant pour avoir une non réversibilité de l'actionneur électrique 1 quand il n'est pas alimenté. Ainsi, dans un exemple non limitatif, le couple de maintien est inférieur à 100N/cm (Newton par centimètres). Autrement dit, le couple à appliquer pour faire tourner l'actionneur électrique 1 quand il n'est pas alimenté est supérieur ou égal à 100N/cm. L'actionneur électrique 1 est ainsi non réversible (il ne peut pas tourner) lorsqu'il y a des forces inférieures à 100N/cm.
Un train d'engrenages épicycloïdal permet ainsi d'avoir un couple de maintien suffisant pour empêcher l'élément mobile 20 de bouger lors de vibrations qui peuvent survenir quand le véhicule automobile est en mouvement, par exemple quand il passe sur un dos d'âne. Ainsi, tout bruit provenant de l'élément mobile 20 est supprimé.
Par ailleurs, le fait d'avoir un couple de maintien suffisant pour empêcher l'élément mobile 20 de bouger permet de couper l'alimentation de l'actionneur électrique 1 après qu'un réglage thermique (réglage du chauffage, de la climatisation et/ou de la ventilation) a été fait pour mettre l'élément mobile 20 dans une position déterminée. Il n'est pas nécessaire de faire marcher ledit actionneur électrique 1 pour que l'élément mobile 20 reste dans la position déterminée. Cela permet de moins consommer d'énergie.

### • Carte électronique 14

La carte électronique 14 est illustrée sur les figures 1 à 4, et 7a à 9b.

Dans un mode der réalisation non limitatif, la carte électronique 14 est plane et s'étend dans un plan perpendiculaire à l'axe moteur 102. Le plan d'extension croise ainsi l'axe moteur 102.

Dans un mode de réalisation non limitatif, la carte électronique 14 est positionnée sur ou sous ledit moteur électrique 10.

Dans une variante de réalisation non limitative illustrée sur la figure 7b, elle est positionnée sur le stator 100 du moteur électrique 10.

Dans un mode de réalisation non limitatif, elle est adaptée pour encercler tout ou partie du rotor 101. C'est ainsi un disque tout ou partie troué. L'assemblage de la carte électronique 14 est simple et rapide puisqu'il suffit de la placer sur le stator 100. L'assemblage de la carte électronique 14 peut être ainsi automatisé.

Dans une variante de réalisation non limitative illustrée, la carte électronique 14 est de forme sensiblement circulaire et présente une ouverture dans laquelle ledit rotor 101 peut être inséré. C'est ainsi un disque entièrement troué qui est centré sur l'axe du moteur 102. Ainsi, il suffit d'emboîter la carte électronique 14 sur le rotor 101.

Dans un mode de réalisation non limitatif illustré, la carte électronique 14 comprend des fenêtres 140 adaptées pour laisser passer les bobines 104 du stator 100. Ainsi, les bobines 104 servent de poka yoke pour positionner la carte électronique 14 sur le stator 100. Lors de l'assemblage, les bobines 104 sont insérées en force dans les fenêtres 140.

La carte électronique 14 comprend un substrat électriquement isolant porteur d'une pluralité de pistes conductrices et d'une pluralité de composants électroniques (non illustrés). Dans un mode de réalisation non limitatif, il comporte également un dispositif de pilotage, appelé « driver » en anglais, du moteur électrique 10 adapté pour recevoir les signaux de commande et les signaux de puissance pour le moteur électrique 10 provenant de la fiche électrique 152.

Par ailleurs, la carte électronique 14 est reliée aux bobines 104 du stator 101 et permet ainsi leur alimentation électrique.

La carte électronique 14 est dans un exemple non limitatif une carte à circuit imprimé appelée PCBA en anglais (« Printed Circuit Board Assembly »).

La configuration de la carte électronique 14 décrite sur ou sous le moteur électrique 10 permet d'avoir une carte électronique 14 suffisamment grande pour positionner les composants actifs (capacité, transistors, inductances etc.) assez éloignées les uns des autres pour assurer une bonne compatibilité électromagnétique.

Comme on peut le voir, les figures 6b, 7b, 8b, 9b et 10b illustrent des étapes d'un procédé d'assemblage des éléments de l'actionneur électrique 1, dans un mode de réalisation non limitatif.
Dans ce mode de réalisation non limitatif :
- la roue motrice 11 est surmoulée avec le rotor 101 ;
- la carte électronique est en forme de disque et présente un orifice à travers duquel le rotor 101 et la roue motrice 11 peuvent passer.
Les étapes sont ainsi les suivantes :
- emboîtement de l'ensemble rotor 101-roue motrice 11 dans le stator 100 (figure 6b) ;
- positionnement de la carte électronique 14 sur le stator 101 (figure 7b) ;
- emboîtement de la couronne satellite 12 dans la roue motrice 11 de sorte à entourer ladite roue motrice 11 et positionnement de ladite couronne satellite 12 sur la carte électronique 14 (figure 8b);
- insertion de l'étoile de sortie 130 dans le rotor 101 du moteur électrique de sorte à emboîter la roue de sortie 13 dans la couronne satellite 12 et dans la roue motrice 11 (figure 9b) ;
- positionnement de l'ensemble 10-11-12-13-14 dans le capot inférieur 15b du boîtier 15 ;
- placement du capot supérieur 15a sur le capot inférieur 15b de sorte à fermer le boîtier 15.

Ainsi, on a un empilement du moteur électrique 10, de la roue motrice 11, de la carte électronique 14, de la couronne satellite 12 et de la roue de sortie 13 dans cet ordre selon l'axe moteur 102.

Bien entendu la description de l'invention n'est pas limitée à l'application et aux modes de réalisation décrits ci-dessus.
Ainsi, outre l'utilisation dans un système HVAC, l'actionneur électrique 1 peut également être utilisé pour entraîner un élément mobile 20, tel qu'un volet situé en face avant du véhicule automobile pour réguler l'air d'admission au niveau du compartiment moteur et améliorer la pénétration aérodynamique du véhicule automobile ;
Ainsi, l'actionneur électrique 1 peut être utilisé dans tout système qui nécessite d'entraîner un élément mobile en rotation ;
Ainsi, dans un autre mode de réalisation non limitatif, le boîtier 15 est réalisé dans un matériau métallique.
Ainsi, dans un autre mode de réalisation non limitatif, le boîtier 15 présente une forme qui peut être différente de la forme circulaire de sorte que son dispositif de montage 151 puisse s'adapter à des points de fixation sur des systèmes HVAC existants et ainsi de pouvoir remplacer des actionneurs électriques existants par celui objet de l'invention.
Ainsi, dans un autre mode de réalisation non limitatif, la carte électronique 14 est de forme semi-circulaire et présente une ouverture en semi-circulaire. Ainsi, dans un autre mode de réalisation non limitatif, la carte électronique est une carte flexible appelée « flexboard » en anglais.
Ainsi, dans un autre mode de réalisation non limitatif, la carte électronique 14 est en outre adaptée pour envoyer des signaux de diagnostique de l'actionneur électrique 1 à un réseau multiplexé de type CAN ou LIN via le connecteur électrique (non illustré) qui coopère avec la fiche électrique 152. Ainsi, dans un autre mode de réalisation non limitatif, l'élément mobile 20 est une pièce cinématique en liaison avec plusieurs volets aérauliques. L'étoile de sortie 130 de la roue de sortie 13 est ainsi adaptée pour coopérer avec ladite pièce cinématique. L'actionneur électrique 1 est ainsi adapté pour commander électriquement plusieurs volets aérauliques.
Ainsi, dans un autre mode de réalisation non limitatif, la couronne satellite 12 comprend un seul étage ou plus de deux étages de satellites 120. On notera que plus on augmente le nombre d'étages, plus le rapport de démultiplication du train d'engrenages augmente, et plus le couple à la sortie augmente.

Ainsi, l'invention décrite présente notamment les avantages suivants :
- elle permet d'avoir un actionneur électrique 1 plus compact radialement et axialement. La hauteur et la largeur sont réduites ;
- elle donne la possibilité d'éviter d'avoir une pièce cinématique intermédiaire entre l'élément mobile 20 et l'actionneur électrique 1. Ainsi, il n'y pas de bruit créé par une pièce intermédiaire en mouvement. En supprimant la pièce intermédiaire on réduit le poids du système HVAC dans son ensemble et le nombre de pièces pour mettre en mouvement l'élément mobile 20. Ainsi, cet avantage est particulièrement intéressant du fait de la tendance qu'ont les constructeurs d'augmenter le nombre d'éléments mobiles 20 dans les véhicules automobiles pour augmenter les zones de confort thermique pour les utilisateurs des véhicules automobiles. Par ailleurs, il y a moins d'usure sur la chaîne HVAC-élément mobile ce qui permet une meilleure fiabilité et une meilleure robustesse du système HVAC ;

- elle permet de ne pas utiliser de vis sans fin pour attaquer le train d'engrenages et assurer un couple de maintien suffisant, ce qui évite de coucher le moteur électrique dans le système HVAC. L'utilisation d'une vis sans fin nécessite en effet de coucher le moteur électrique de sorte que l'axe moteur soit perpendiculaire à l'axe de l'étoile de sortie. Cela entraîne une augmentation de la hauteur d'un tel actionneur électrique avec un moteur électrique couché car ledit moteur électrique comprend un diamètre supérieur à la hauteur de l'actionneur électrique ;
- elle permet un gain en rendement et une suppression de bruit provenant de l'élément mobile 20 grâce au train d'engrenages épicycloïdal ;
- grâce au boîtier 15 unique de l'actionneur électrique 1, elle évite d'avoir deux logements distincts dont un carter pour le moteur électrique 10 et dont un autre logement pour le train d'engrenages formé par la roue motrice 11, la couronne satellite 12 et la roue de sortie 13 ;
- elle permet de ne plus utiliser d'arbre d'entraînement et les inconvénients associés.

## Revendications

1. Actionneur électrique (1) adapté pour entraîner un élément mobile (20) pour un système de chauffage, ventilation et/ou climatisation pour véhicule automobile, comprenant :
- un moteur électrique (10) comprenant un stator (100) et un rotor (101) ;
- une couronne satellite (12) comprenant au moins un satellite (120) ;
- une roue de sortie (13) adaptée pour être entraînée en rotation par ladite couronne satellite (12) ;
selon lequel :
- ledit actionneur électrique (1) comprend en outre une roue motrice (11) en liaison directe avec ledit rotor (101), adaptée pour être entraînée en rotation par ledit rotor (101) et adaptée pour entraîner en rotation ladite couronne satellite (12) ;
- ladite roue de sortie (13) comprend une étoile de sortie (130) adaptée pour entraîner ledit élément mobile (20) dudit système de ventilation, chauffage et/ou climatisation, l'étoile de sortie est creuse et présente des cannelures,
- ledit moteur électrique (10) est traversé tout ou partie par ladite étoile de sortie (130) de ladite roue de sortie (13), le rotor étant creux et l'étoile de sortie passant à travers l'ouverture du rotor.

2. Actionneur électrique (1) selon la revendication 1, selon lequel ladite roue motrice (11) est surmoulée avec ledit rotor (101) dudit moteur électrique (10).

3. Actionneur électrique (1) selon l'une quelconque des revendications précédentes 1 ou 2, selon lequel ladite roue motrice (11) est creuse.

4. Actionneur électrique (1) selon l'une quelconque des revendications précédentes 1 à 3, selon lequel ledit moteur électrique (10), ladite roue motrice (11), ladite couronne satellite (12) et ladite roue de sortie (13) s'étendent selon un même axe moteur (102) dudit moteur électrique (10).

5. Actionneur électrique (1) selon l'une quelconque des revendications précédentes 1 à 4, selon lequel ledit actionneur électrique (1) comprend en outre un boîtier (15), et selon lequel ledit moteur électrique (10), ladite roue motrice (11), ladite couronne satellite (12) et ladite roue de sortie (13) sont logés dans ledit boîtier (15).

6. Actionneur électrique (1) selon l'une quelconque des revendications précédentes 1 à 5, selon lequel ledit au moins un satellite (120) comprend deux étages d'engrenages (120a, 120b) avec des diamètres différents.

7. Actionneur électrique (1) selon l'une quelconque des revendications précédentes 1 à 6, selon lequel ladite couronne satellite (12) comprend un nombre impair de satellites (120).

8. Actionneur électrique (1) selon l'une quelconque des revendications précédentes 1 à 7, selon lequel ladite roue motrice (11), ladite couronne satellite (12) et ladite roue de sortie (13) forment un train d'engrenages épicycloïdal.

9. Actionneur électrique (1) selon l'une quelconque des revendications précédentes 1 à 8, selon lequel ledit actionneur électrique (1) comprend en outre une carte électronique (14) positionnée sur ou sous ledit moteur électrique (10).

## Patentansprüche

1. Elektrischer Aktuator (1), der zum Antrieb eines beweglichen Elements (20) für ein Heizungs-, Lüftungs- und/oder Klimatisierungssystem für Kraftfahrzeuge geeignet ist, umfassend:
- einen Elektromotor (10), der einen Stator (100) und einen Rotor (101) umfasst;
- einen Planetenradträger (12), der mindestens ein Planetenrad (120) umfasst;
- ein Abtriebsrad (13), das dazu ausgelegt ist, durch den Planetenradträger (12) in Rotation versetzt zu werden;
wobei:
- der elektrische Aktuator (1) ferner ein Antriebsrad (11) umfasst, das in direkter Verbindung mit dem Rotor (101) steht, dazu ausgelegt ist, durch den Rotor (101) in Rotation versetzt zu werden, und dazu ausgelegt ist, den Planetenradträger (12) in Rotation zu versetzen;
- das Abtriebsrad (13) einen Abtriebsstern (130) umfasst, der dazu ausgelegt ist, das bewegliche Element (20) des Lüftungs-, Heizungs- und/oder Klimatisierungssystems anzutreiben, wobei der Abtriebsstern hohl ist und Rillen aufweist,
- der Elektromotor (10) ganz oder teilweise von dem Abtriebsstern (130) des Abtriebsrads (13) durchdrungen wird, wobei der Rotor hohl ist und der Abtriebsstern durch die Öffnung des Rotors hindurchgeht.

2. Elektrischer Aktuator (1) nach Anspruch 1, wobei das Antriebsrad (11) mit dem Rotor (101) des Elektromotors (10) umspritzt ist.

3. Elektrischer Aktuator (1) nach einem der vorhergehenden Ansprüche 1 oder 2, wobei das Antriebsrad (11) hohl ist.

4. Elektrischer Aktuator (1) nach einem der vorhergehenden Ansprüche 1 bis 3, wobei der Elektromotor ANSPRÜCHE
(10), das Antriebsrad (11), der Planetenradträger (12) und das Abtriebsrad (13) entlang einer gemeinsamen Motorachse (102) des Elektromotors (10) verlaufen.

5. Elektrischer Aktuator (1) nach einem der vorhergehenden Ansprüche 1 bis 4, wobei der elektrische Aktuator (1) ferner ein Gehäuse (15) umfasst, und wobei der Elektromotor (10), das Antriebsrad (11), der Planetenradträger (12) und das Abtriebsrad (13) in dem Gehäuse (15) untergebracht sind.

6. Elektrischer Aktuator (1) nach einem der vorhergehenden Ansprüche 1 bis 5, wobei das mindestens eine Planetenrad (120) zwei Zahnradstufen (120a, 120b) mit unterschiedlichen Durchmessern umfasst.

7. Elektrischer Aktuator (1) nach einem der vorhergehenden Ansprüche 1 bis 6, wobei der Planetenradträger (12) eine ungerade Anzahl von Planetenrädern (120) umfasst.

8. Elektrischer Aktuator (1) nach einem der vorhergehenden Ansprüche 1 bis 7, wobei das Antriebsrad (11), der Planetenradträger (12) und das Abtriebsrad (13) ein Planetengetriebe bilden.

9. Elektrischer Aktuator (1) nach einem der vorhergehenden Ansprüche 1 bis 8, wobei der elektrische Aktuator (1) ferner eine Elektronikplatine (14) umfasst, die auf oder unter dem Elektromotor (10) positioniert ist.

## Claims

1. Electric actuator (1) adapted to drive a mobile element (20) for a heating, ventilation and/or air conditioning system for a motor vehicle, comprising:
- an electric motor (10) comprising a stator (100) and a rotor (101);
- a satellite crown (12) comprising at least one satellite (120);
- an output wheel (13) adapted to be driven in rotation by said satellite crown (12);
wherein:
- said electric actuator (1) further comprises a drive wheel (11) in direct connection with said rotor (101), adapted to be driven in rotation by said rotor (101) and adapted to drive said satellite crown (12) in rotation;
- said output wheel (13) comprises an output star (130) adapted to drive said mobile element (20) of said ventilation, heating and/or air conditioning system, the output star is hollow and has splines,
- said electric motor (10) is traversed wholly or partly by said output star (130) of said output wheel (13), the rotor being hollow and the output star passing through the opening of the rotor.

2. Electric actuator (1) according to claim 1, wherein said drive wheel (11) is overmolded with said rotor (101) of said electric motor (10).

3. Electric actuator (1) according to any one of the preceding claims 1 or 2, wherein said drive wheel (11) is hollow.

4. Electric actuator (1) according to any one of the preceding claims 1 to 3, wherein said electric motor CLAIMS
(10), said drive wheel (11), said satellite crown (12) and said output wheel (13) extend along a same motor axis (102) of said electric motor (10).

5. Electric actuator (1) according to any one of the preceding claims 1 to 4, wherein said electric actuator (1) further comprises a housing (15), and wherein said electric motor (10), said drive wheel (11), said satellite crown (12) and said output wheel (13) are housed in said housing (15).

6. Electric actuator (1) according to any one of the preceding claims 1 to 5, wherein said at least one satellite (120) comprises two gear stages (120a, 120b) with different diameters.

7. Electric actuator (1) according to any one of the preceding claims 1 to 6, wherein said satellite crown (12) comprises an odd number of satellites (120).

8. Electric actuator (1) according to any one of the preceding claims 1 to 7, wherein said drive wheel (11), said satellite crown (12) and said output wheel (13) form an epicyclic gear train.

9. Electric actuator (1) according to any one of the preceding claims 1 to 8, wherein said electric actuator (1) further comprises an electronic board (14) positioned on or under said electric motor (10).
